# EUROPÄISCHE PATENTSCHRIFT

(11) **EP 2 405 155 B1**
(45) Veröffentlichungstag und Bekanntmachung des Hinweises auf die Patenterteilung: **06.05.2015**
(21) Anmeldenummer: 11165977.7
(22) Anmeldetag: 13.05.2011
(51) Int. Cl.: F16G 1/10, F16G 1/28

(54) **Kraftübertragungsriemen, insbesondere Zahnriemen**
Power transmission belt, in particular tooth belt
Courroie de transmission de puissance, notamment courroie dentée

(30) Priorität: 07.07.2010 DE 102010017783
(43) Veröffentlichungstag der Anmeldung: 11.01.2012
(73) Patentinhaber: ContiTech Antriebssysteme GmbH, 30165 Hannover (DE)
(72) Erfinder: Teves, Reinhard, 30926 Seelze (DE); Well, Michael, 38159 Vechelde (DE); Mahnken, Claus-Lüder, 27367 Ahausen (DE)
(74) Vertreter: Finger, Karsten

(56) Entgegenhaltungen:
- EP-A2- 2 006 574
- WO-A2-2009/040647
- "DIN 55945:2007-03 Reaktivverduenner- Beschichtungsstoffe und Beschichtungen - Ergänzende Begriffe zu DIN EN ISO 4618 -Paints and varnishes - Additional terms and definitions to DIN EN ISO 4618", 20070301, 1 March 2007 (2007-03-01), XP008149686,

## Beschreibung

Die Erfindung betrifft einen Kraftübertragungsriemen mit einem elastischen Grundkörper, umfassend eine Decklage als Riemenrücken und einen Unterbau mit einer Kraftübertragungszone, wobei wenigstens die Kraftübertragungszone mit einer Gewebeauflage versehen ist, welche beschichtet ist. Die Erfindung betrifft ferner ein Verfahren zur Herstellung eines derartigen Antriebsriemens.

Kraftübertragungsriemen, die auch als Antriebsriemen bezeichnet werden und im Funktionszustand zumeist endlos geschlossen sind, können als Flachriemen, Keilriemen, Keilrippenriemen und Zahnriemen ausgebildet sein.

Der elastische Grundkörper ist zumeist ein Vulkanisat, umfassend die beiden Werkstoffgruppen Elastomere, nämlich insbesondere vollvernetzte Kautschukmischungen, sowie thermoplastische Elastomere (TPE), die teilvernetzte thermoplatische Vulkanisate sind. Von besonderer Bedeutung sind die Elastomere, wobei bevorzugte Kautschukkomponenten noch näher vorgestellt werden. Hinsichtlich der üblichen Mischungsingredienzien wird auf den allgemeinen Stand der Kautschukmischungstechnologie verwiesen.

Gewebebeschichtungen bei Kraftübertragungsriemen schützen in der Regel vor Verschleiß. Insbesondere bei Zahnriemen wird dadurch das mechanisch besonders belastete Zahngewebe vor Verschleiß geschützt. DE4400434A1, EP0662571A1 und EP1088177A1 beschreiben beispielsweise Gewebeschichtungen, die aus einer Polyurethanbeschichtung mit teilchenförmigen Fluorpolymeren bestehen und eine gute Abriebbeständigkeit ergeben. Ebenso ist bekannt, teilchenförmigen Fluorpolymere in einer vernetzten Elastomermatrix, bevorzugt auf der Basis von HNBR-Kautschuk, als Gewebebeschichtung zu verwenden. Dies ist beispielsweise in WO2005/038294A1 beschrieben, wobei das Fluorpolymer in einer größeren Menge vorhanden sein muss als das Elastomermaterial der Gewebebeschichtung. Nachteil hierbei ist die nicht oder nur sehr schlecht steuerbare Eindringtiefe dieser Beschichtungen in das Gewebe. Zudem sind Elastomermischungen, die sehr hoch mit teilchenförmigen Fluorpolymeren und / oder anderen Füllstoffen gefüllt sind, in der Regel hochviskos. Dadurch wird die Verarbeitung schwierig und die Eindringtiefe in das Gewebe ist nicht ausreichend hoch um eine optimale Verschleißfestigkeit, d.h. Abriebbeständigkeit, zu gewährleisten. DE102008013570A1 beschreibt Beschichtungssysteme für Gewebeoberflächen von Kraftübertragungsriemen, wobei die Beschichtung ein Polyisocyanurat - Polyharnstoff enthält, das aus einem Isocyanat mit wenigstens zwei NCO-Gruppen als Basiskomponente gebildet ist. Diese Beschichtung zeigt hervorragende Gleitfähigkeit bei guter Wärmebeständigkeit, besitzt aber aufgrund der Empfindlichkeit der Beschichtungsmassen ebenso eine ungünstige Verarbeitbarkeit. Außerdem ist durch die notwendigen Lösemittel keine tief in das Gewebe eindringende Beschichtung möglich.

Gleitsysteme für Riemen mit geschlossenen Oberflächen werden für trockene Anwendungen in EP1157813A1, WO2005038294A1, WO2005080821A1 und EP1881229A1, für Anwendungen in Öl in WO2005080820A1 und WO2007036960A1 beschrieben. Den in den Druckschriften beschriebenen Systemen ist gemeinsam, dass die aus einer Beschichtung aus einer elastomeren Matrix und eines in weniger als 50% Menge vorhandenen Gleitmittels, bevorzugt fluorpolymerhaltig, bestehen. Basis der elastomeren Matrix sind immer im Handel erhältliche Polymere, die aufgrund ihres hohen Molekulargewichtes von >5000g/mol bei der Applikation ohne oder fast ohne Lösemittel keine Möglichkeit haben, in das Gewebe einzudringen. Die Schicht deckt somit das Gewebe zwar ab, dringt aber nicht in dieses ein, was einerseits zu einer leichten Zerrüttung des Gewebes führt und andererseits in Anwendung zu Rissen.

Darüber hinaus ist ein Kraftübertragungsriemen gemäß dem Oberbegriff des unabhängigen Anspruchs 1 in WO 2009/040647 A2 offenbart.

Es ist daher die Aufgabe der vorliegenden Erfindung, einen Kraftübertragungsriemen bereitzustellen, dessen Kraftübertragungszone und / oder Decklage mit wenigstens einer Textilauflage versehen ist, welche eine abriebfeste Beschichtung besitzt, deren Härte über einen weiten Bereich variiert werden kann und auch bei höheren Härten noch eine gute Fließfähigkeit bedingt durch die niedrige Viskosität besitzt. Die Eindringtiefe der Beschichtung in die Textilauflage soll dadurch über einen weiten Bereich steuerbar sein. Gelöst wird diese Aufgabe dadurch, dass die Textilauflage der Kraftübertragungszone und/oder der Decklage mit wenigstens einer Beschichtung versehen ist, welche wenigstens einen Reaktivverdünner gemäß DIN 55945:2007-03 enthält.

Wobei Reaktivverdünner gemäß DIN 5945:2007-03 ausgewählt ist aus der Gruppe der Methacrylate und/oder der Acrylate und/oder Vinylether und/oder Glycidylether.

Überraschenderweise wurde gefunden, dass ein Kraftübertragungsriemen, dessen Textilauflage mit einer derartigen Beschichtung versehen ist, besonders gute Abriebbeständigkeit und sich daraus ergebender Langlebigkeit aufweist. Gleichzeitig ist dadurch die Härte gut variierbar und besitz auch bei hohen Härten noch eine gute Fließfähigkeit, die eine gute Eindringtiefe in die textile Lage ermöglicht. Diese Entkopplung von Mischungshärte der Beschichtung und der Viskosität zeigt sich nur, wenn die Beschichtung der Textilauflage wenigstens einen Reaktivverdünner gemäß DIN 55945:2007-03 enthält.

Decklage und Unterbau des Kraftübertragungsriemens bilden als Gesamteinheit den elastischen Riemengrundkörper des Kraftübertragungsriemens, der insbesondere aus einem elastomeren Werkstoff besteht, insbesondere wiederum in Form einer vulkanisierten Kautschukmischung. Als Kautschukkomponente wird zumeist ein Ethylen-Propylen-Mischpolymerisat (EPM), ein Ethylen-Propylen-Dien-Misch-Polymerisat (EPDM), ein (teil)hydrierter Nitrilkautschuk (HNBR), Chloroprenkautschuk (CR), Polyurethan (PU) oder Fluor-Kautschuk (FPM) eingesetzt. Etwaige Zugstränge bestehen aus Stahl, Polyamid, Aramid, Polyester, Polyethylentherepthalat (PET), Glasfasern, Kohlefasern, Polyetherketon (PEEK) oder Polyethylen-2,6-naphthalat (PEN).

Die Textilauflage kann aus einem Gewebe, Gewirke oder Gestrick oder einer Kombination der genannten bestehen. Bevorzugt findet als Material für das Gewebe, Gewirke oder Gestrick Baumwolle oder weitere Naturfasern, wie beispielsweise Flachs, Leinen oder Hanf Verwendung. Ebenso kann aber auch Aramid, Nylon und / oder Polyester verwendet werden.

Erfindungsgemäß, ist der Reaktivverdünner nach DIN 55945: 2007-03 aus der Gruppe der Methacrylate und/oder der Acrylate und/oder Vinylether und/oder Glycidylether ausgewählt.

Werden Acrylate verwendet, so haben diese bevorzugt Isocyanatgruppen. Ebenso sind difunktionelle Gruppen am Kettenende des Reaktivverdünners bevorzugt.

In einer besonders bevorzugten Ausführungsform handelt es sich bei dem Reaktivverdünner um Urethanacrylat (UA) und / oder Dipropylenglycoldiacrylat (DPGDA) und / oder Tripropylenglycoldiacrylat (TPGDA) und / oder Hexandioldiacrylat (HDDA), bevorzugt Hexan-1,6-dioldiacrylat (1,6-HDDA) und / oder Trimethylpropantriacrylat (TMPTA) und / oder Diurathendimethacrylat (HEMA-MDI). Es kann jeweils ein Reaktivverdünner alleine oder in Kombination mit wenigstens einem weiteren verwendet werden.

Insbesondere durch die Verwendung von Urethanacrylat kann zusätzlich die Polarität der Mischung vergrößert werden, wodurch die Quellung des Kraftübertragungsriemens in unpolaren Medien verringert wird.

Es hat sich als vorteilhaft gezeigt, wenn der genannte Reaktivverdünner in Mengen von 0,1 bis 50 bevorzugt in Mengen von 0,5 bis 30 phr, besonders bevorzugt in Mengen von 1 bis 25 phr eingesetzt wird.

Der Reaktivverdünner kann hierbei auch Lösemittel enthalten. Die Mengenangaben beziehen sich in diesem Fall auf Reaktivverdünner inklusive Lösemittel.

Die in dieser Schrift verwendete Mengenangabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Enthält der Reaktivverdünner als fertiges Handelsprodukt bereits Lösemittel oder sonstige Zusatzstoffe, so beziehen sich die Angaben in diesem Fall auf Reaktivverdünner inklusive Lösemittel bzw. Zusatzstoffe.

Als Zusatzstoff kann wenigstens ein pulverförmiger Gleitkörper enthalten sein, ebenso wie Vernetzungsmittel.

Als Vernetzungsmittel können alle der fachkundigen Person bekannten Vernetzungsmittel und Vernetzungshilfsmittel verwendet werden. Weiterhin handelt es sich bei der Vernetzung bevorzugt um eine radikalische Vernetzung.

Der pulverförmige Gleitkörper ist bevorzugt ausgewählt aus der Gruppe bestehend aus Polytetrafluorethylen (PTFE) und / oder modifiziertem Polytetrafluorethylen (TFM) und / oder Fluorethylenpolymer (FEP) und / oder Perfluoralkylvinylether-Tetraethylen-Copolymer (PFA) und / oder Ethylen-Tetrafluorethylen-Copolymer (ETFE) und / oder Polyvinylfluorid (PVF) und / oder Polyvinylidenflourid (PVDF) und / oder ultrahochmolekularem Polyethylen (UHMWPE), wobei Polytetrafluorethylen (PTFE) und / oder modifiziertes Polytetrafluorethylen (TFM) besonders bevorzugt sind.

Es ist auch denkbar andere, der fachkundigen Person bekannte pulverförmige Gleitkörper, wie beispielsweise Silikate, Sulfide, Graphit, etc. zu verwenden. Die genannten pulverförmigen Gleitkörper können alleine oder in Kombination verwendet werden.

Die Menge des pulverförmigen Gleitkörpers ist in einer besonders bevorzugten Ausführungsform kleiner oder gleich der Menge der gesamten Kautschukkomponente(n).

Die Dicke der Textilauflage beträgt bevorzugt 0,5 bis 1 mm und die Eindringtiefe der Beschichtung in die Textilauflage beträgt bevorzugt 10 bis 90%, besonders bevorzugt 50 bis 90%.

Der Kraftübertragungsriemen findet Verwendung als Flachriemen, Keilriemen, Keilrippenriemen und Zahnriemen, wobei letzterer besonders bevorzugt ist.

Der Kraftübertragungsriemen, insbesondere der Zahnriemen, kann mit der Textilauflage, welche mit der erfindungsgemäßen Beschichtung versehen ist, vollständig ummantelt sein, wenigstens aber die Textilauflage der Kraftübertragungszone ist mit der erfindungsgemäßen Beschichtung versehen.

Es ist weiterhin möglich, dass auch die Kautschukmischung des Grundkörpers den genannten Reaktivverdünner als Bestandteil enthält und / oder dass auf den Grundkörper eine separate Beschichtung aufgebracht wird, welche den genannten Reaktivverdünner enthält. Letzteres insbesondere in Verbindung mit pulverförmigen Gleitkörpern, wie sie bereits obig beschrieben sind.

Eine weitere Aufgabe der Erfindung besteht darin, zwei Verfahren zur Herstellung eines Kraftübertragungsriemens, insbesondere eines Zahnriemens, bereitzustellen, bei denen das eingangs genannte Anforderungsprofil gewährleistet wird. Der Kraftübertragungsriemen, insbesondere der Zahnriemen, kann durch das erfindungsgemäße Verfahren vollständig ummantelt werden, wenigstens aber die Textilauflage der Kraftübertragungszone wird durch das Verfahren beschichtet.

Gelöst wird diese Aufgabe durch ein erstes Verfahren mit wenigstens folgenden Verfahrensschritte:
- die Kraftübertragungszone und / oder die Decklage des noch unvulkanisierten Riemenrohlings wird mit wenigstens einer Textilauflage konfektioniert;
- auf die Textilauflage wird anschließend wenigstens eine Beschichtung aufgebracht, die wenigstens einen Reaktivverdünner gemäß DIN 55945:2007-03 enthält; wobei der Reaktivverdünner ist aus der Gruppe der Methacrylate und/ oder der Acrylate und/oder Vinylether und/oder Glycidylether ausgewählt;
- Vulkanisation des Riemenrohlings unter Ausbildung eines Haftverbundes von Grundkörper, Textilauflage und Beschichtung.

Das zweite Verfahren ist wenigstens durch folgende Verfahrensschritte gekennzeichnet:
- auf die separate Textilauflage wird zunächst wenigstens eine Beschichtung aufgebracht, die wenigstens einen Reaktivverdünner gemäß DIN 55945:2007-03 enthält; wobei der Reaktivverdünner ist aus der Gruppe der Methacrylate und/oder der Acrylate und/oder Vinylether und/oder Glycidylether ausgewählt;
- die Kraftübertragungszone und / oder die Decklage des noch unvulkanisierten Riemenrohlings wird mit der beschichteten Textilauflage konfektioniert;
- Vulkanisation des Riemenrohlings unter Ausbildung eines Haftverbundes von Grundkörper, Textilauflage und Beschichtung.

Bezüglich der Zusammensetzung der Beschichtung sei an dieser Stelle auf die bereits in den obigen Abschnitten vorliegende Charakterisierung verwiesen. Insbesondere hinsichtlich des Reaktiwerdünners und dessen Auswahl. Ebenso bezüglich des vorteilhafterweise zusätzlich in der Beschichtung vorhandenen Vernetzungsmittels und / oder pulverförmigen Gleitkörpers.

Ein besonderer Vorteil der erfindungsgemäßen Verfahren liegt darin, dass die Beschichtung in die Textilauflage eindringt und zwar derart, dass die Eindringtiefe der Beschichtung in die Textilauflage bevorzugt 10 bis 90%, besonders bevorzugt 50 bis 90% entspricht. Die Dicke der Textilauflage beträgt hierbei bevorzugt 0,5 bis 1 mm.

Die Textilauflage kann auf der Kontaktseite zum elastischen Grundkörper haftfreundlich präpariert werden. Dies bedeutet, dass wenigstens ein Haftvermittler, wenigstens ein Haftzement oder wenigstens eine Haftung herbeiführende Gummilösung verwendet wird. Auch weitere, der fachkundigen Person bekannte Verfahren oder Materialien können verwendet werden, um eine Haftung von Textilauflage und elastischem Grundkörper zu gewährleisten.

Die Erfindung wird nun anhand von Versuchsbeispielen näher vorgestellt werden. Die Tabelle 1 zeigt die entsprechende Zusammensetzung der Beschichtung für die textile Lage auf, während in der Tabelle 2 die Versuchsergebnisse dargestellt sind. Vergleichsmischungen, die aus dem Stand der Technik bekannt sind, sind mit "V" gekennzeichnet, während erfindungsgemäße Zusammensetzungen mit "E" gekennzeichnet sind.

Den Ergebnissen der Tabelle 2 lagen folgende Prüfvorschriften zugrunde:
- Shore-A-Härte gemäß DIN 53 505
- Festigkeit, Dehnung und Spannungswert bei 100% und 300% Dehnung gemäß DIN 53 504, DIN 53455, DIN 53571
- Relativer Vernetzungsgrad von 10% (t10 Anvulkanisationszeit) und 90% (t90, Ausvulkanisationszeit) und Drehmoment Fa bzw. Fe mittels rotorlosem Vulkameter (MDR = Moving Disc Rheometer) gemäß DIN 53 529
- Mooney-Viskosität (ML 1+4) bei 100°C gemäß ASTM D1646
- Viskosität mittels Rheotester (Fa. Göttfert), Düse: 1mm, Kanallänge: 12,0 mm; Stempelgeschwindigkeit: 0,63mm/s; Temperatur: 80°C
- Abrieb bei Raumtemperatur gemäß DIN53 516

**Tabelle 1**

| **Mischungsbestandteile** | **Einheit** | **V1** | **E1** | **E2** | **E3** |
|---|---|---|---|---|---|
| HNBR (a) | phr | 50 | 100 | 100 | 100 |
| HNBR (b) | phr | 50 | -- | -- | -- |
| Kieselsäure (c) | phr | 10 | 10 | 10 | 10 |
| Reaktiwerdünner (d) | phr | -- | 25 | -- | -- |
| Reaktiwerdünner (e) | phr | -- | -- | 25 | 25 |
| Pulverförmiger Gleitkörper (f) | phr | 90 | 90 | 90 | 75 |
| Talkum(g) | phr | 35 | 35 | 35 | 50 |
| Zinkoxid | phr | 5 | 5 | 5 | 5 |
| Antioxidanz (h) | phr | 2 | 2 | 2 | 2 |
| Vulkanisationsmittel (i) | phr | 8 | 8 | 8 | 8 |

| | | | | | |
|---|---|---|---|---|---|
| (a) Zetpol^{®} 2011, Fa. Zeonchemicals (b) HNBR modifiziert mir Zn-Methacrylat, Zeoforte^{®} ZSC 2295, Fa. Zeonchemicals (c) Ultrasil^{®} VN3, Fa. Evonik Degussa (d) Hexandioldiacrylat (HDDA), Laromer^{®} HDDA, Fa. BASF (e) aliphatisches Urethanacrylat, 65%ig gelöst in Tripropylenglycoldiacrylat (TPGDA), Laromer^{®} UA 19 T, Fa. BASF (f) PTFE, Dyneon^{®} TF 9207, Fa. Dyneon (g) Talc 10 M2, Fa. Luzenac N.V. (h) 4,4'-Bis(a,a-dimethylbenzyl)-diphenylamine, Naugard^{®} 445, Fa. Chemtura (i) Di(tert-butylperoxyisopropyl)benzol, Perkadox^{®} 1440, Fa. Akzo | | | | | |

**Tabelle 2**

| **Eigenschaften** | **[Einheit]** | **V1** | **E1** | **E2** | **E3** |
|---|---|---|---|---|---|
| **MDR 2000, 180 °C** | | | | | |
| Fa | dNm | 3,45 | 1,68 | 1,79 | 1,85 |
| Fe | dNm | 39,14 | 58,66 | 28,53 | 30,23 |
| Fe - Fa | dNm | 35,69 | 56,98 | 26,74 | 28,38 |
| t10 | min | 0,33 | 0,23 | 0,33 | 0,34 |
| t90 | min | 3,17 | 3,54 | 4,53 | 4,51 |
| Mooney | | 67 | 42 | 51 | 53 |
| Viskosität | Pa*s | 2730 | 1760 | 1820 | 1915 |

| **20 min, 180 °C Heizzeit** | | | | | |
|---|---|---|---|---|---|
| Härte | Shore A | 79 | 86 | 78 | 80 |
| Festigkeit | MPA | 12,9 | 11,7 | 12,1 | 12,8 |
| Dehnung | % | 310 | 228 | 341 | 320 |
| Spannungswert (100 %) | MPa | 2,5 | 4,7 | 2,8 | 3,0 |
| Spannungswert (300 %) | MPa | 6,9 | - | 8,9 | 9,4 |
| Abrieb | mm³ | 117 | 93 | 102 | 106 |

Aus den Ergebnissen der Tabelle 2 wird deutlich, dass die Beschichtung einer Textilauflage des Kraftübertragungsriemens, welche einen Reaktivverdünner gemäß DIN 55945:2007-03 enthält zu einem vergleichbaren physikalischen Niveau bei deutlich verbesserter Fließfähigkeit führt.

Die Erfindung wird nun ferner anhand von zwei Ausführungsbeispielen unter Bezugnahme auf schematische Darstellungen beschrieben.

Es zeigen:
- Fig. 1: Längsschnitt durch einen Zahnriemen mit einer beschichteten Textilauflage für die Kraftübertragungszone und für die Decklage.
- Fig. 2: Längsschnitt durch einen Kraftübertragungsriemen mit einer beschichteten Textilauflage und Markierung der Eindringtiefe der Beschichtung in die Textilauflage

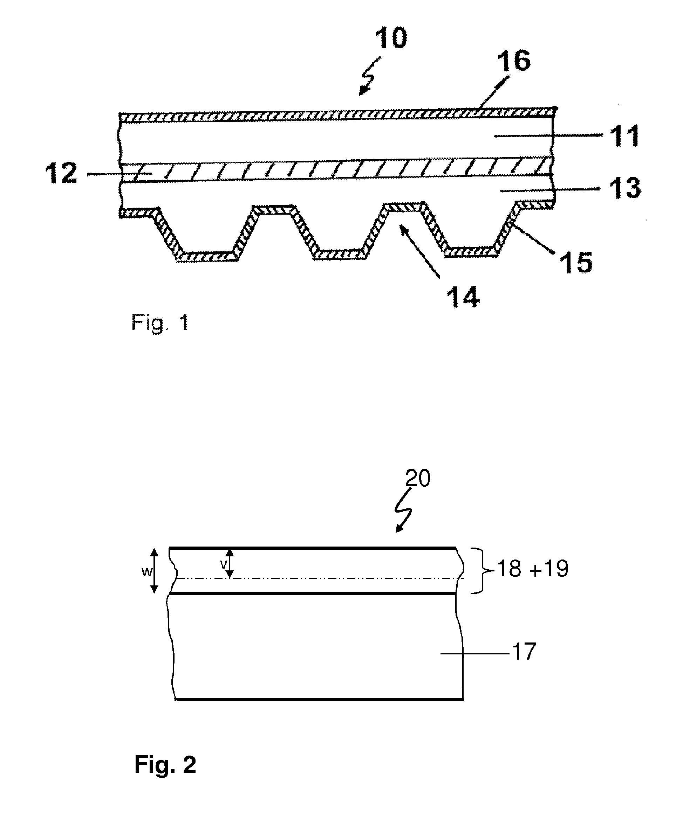

Figur 1 zeigt einen Antriebsriemen 10 in Form eines Zahnriemens mit einer Decklage 11 als Riemenrücken, einer Festigkeitsträgerlage 12 in Form von in Längsrichtung verlaufenden parallel angeordneten Zugträgern sowie mit einem Unterbau 13. Der Unterbau umfasst dabei die Kraftübertragungszone 14. Sowohl die Decklage 11 als auch die Kraftübertragungszone 14 sind jeweils mit einer Textilauflage 15, 16 versehen, die mit einer Beschichtung versehen ist, welche wenigstens einen Reaktivverdünner gemäß DIN 55945:2007-03 enthält.

Figur 2 zeigt einen Kraftübertragungsriemen 20 mit einem elastischen Grundkörper 17 als Gesamteinheit von Decklage und Unterbau. Die Textilauflage 18 der Kraftübertragungszone und / oder der Decklage weist eine Beschichtung 19 auf. Die Textilauflage 18 bildet mit dem elastischen Grundkörper 17 einen Haftverbund. Die Beschichtung 19 der Textilauflage 18 enthält wenigstens einen Reaktivverdünner gemäß DIN 55945:2007-03. Die gestrichelte Linie markiert die Eindringtiefe v der Beschichtung 19 in die Textilauflage 18 und entspricht 10 bis 90% der Dicke w der Textilauflage 18. Hinsichtlich weiterer Bestandteile der Beschichtung 19 wird auf die vorgenannten Ausführungen verwiesen.

### Bezugszeichenliste

### (Teil der Beschreibung)

10 Kraftübertragungsriemen in Form eines Zahnriemens
20 Kraftübertragungsriemen
11 Decklage als Riemenrücken
12 Festigkeitsträger in Form von Zugsträngen
13 Unterbau
14 Kraftübertragungszone
15 Textilauflage der Kraftübertragungszone
16 Textilauflage der Decklage
17 elastischer Grundkörper
18 Textilauflage
19 Beschichtung
v Eindringtiefe der Beschichtung
w Dicke der Textilauflage

## Patentansprüche

1. Kraftübertragungsriemen (10, 20) mit einem elastischen Grundkörper (17), umfassend eine Decklage (11) als Riemenrücken und einen Unterbau (13) mit einer Kraftübertragungszone (14), wobei die Kraftübertragungszone (14) und / oder die Decklage (11) mit wenigstens einer Textilauflage (15, 16, 18) versehen ist, **dadurch gekennzeichnet, dass** die Textilauflage (15, 16, 18) der Kraftübertragungszone (14) und / oder der Decklage (11) mit wenigstens einer Beschichtung (19) versehen ist, welche wenigstens einen Reaktivverdünner gemäß DIN 55945:2007-03 enthält, wobei Reaktivverdünner gemäß DIN 55945:2007-03 ausgewählt ist aus der Gruppe der Methacrylate und / oder der Acrylate und / oder Vinylether und / oder Glycidylether.

2. Kraftübertragungsriemen nach Anspruch 1, **dadurch gekennzeichnet, dass** die Textilauflage (15, 16, 18) aus einem Gewebe, Gewirke oder Gestrick besteht.

3. Kraftübertragungsriemen nach Anspruch 1, **dadurch gekennzeichnet, dass** der Reaktivverdünner gemäß DIN 55945:2007-03 ausgewählt ist aus der Gruppe der Methacrylate und / oder der Acrylate.

4. Kraftübertragungsriemen nach einem der Ansprüche 1 bis 3, **dadurch gekennzeichnet, dass** die Eindringtiefe (v) der Beschichtung (19) in die Textilauflage (15, 16, 18) 10 bis 90 % der Dicke (w) der Textilauflage (15, 16, 18) entspricht.

5. Kraftübertragungsriemen nach einem der Ansprüche 1 bis 4, **dadurch gekennzeichnet, dass** er als Zahnriemen (10) ausgebildet ist.

6. Kraftübertragungsriemen nach einem der Ansprüche 1 bis 5, **dadurch gekennzeichnet, dass** der Kraftübertragungsriemen (10, 20) ummantelt ist.

7. Verfahren zur Herstellung eines Kraftübertragungsriemen (10, 20) mit einem elastischen Grundkörper (17), umfassend eine Decklage (11) als Riemenrücken und einen Unterbau (13) mit einer Kraftübertragungszone (14), wobei die Kraftübertragungszone (14) und / oder die Decklage (11) mit wenigstens einer Textilauflage (15, 16, 18) versehen ist, **gekennzeichnet durch** wenigstens folgende Verfahrensschritte:
- die Kraftübertragungszone (14) und / oder die Decklage (11) des noch unvulkanisierten Riemenrohlings wird mit wenigstens einer Textilauflage (15, 16, 18) konfektioniert;
- auf die Textilauflage (15, 16, 18) wird anschließend wenigstens eine Beschichtung (19) aufgebracht, die wenigstens einen Reaktivverdünner gemäß DIN 55945:2007-03 enthält;
wobei der Reaktivverdünner ist aus der Gruppe der Methacrylate und/ oder der Acrylate und/oder Vinylether und/oder Glycidylether ausgewählt;
- Vulkanisation des Riemenrohlings unter Ausbildung eines Haftverbundes von elastomerem Grundkörper (17), Textilauflage (15, 16, 18) und Beschichtung (19).

8. Verfahren zur Herstellung eines Kraftübertragungsriemen (10, 20) mit einem elastischen Grundkörper (17), umfassend eine Decklage (11) als Riemenrücken und einen Unterbau (13) mit einer Kraftübertragungszone (14), wobei die Kraftübertragungszone (14) und / oder die Decklage (11) mit wenigstens einer Textilauflage (15, 16, 18) versehen ist, **gekennzeichnet durch** wenigstens folgende Verfahrensschritte:
- auf die separate Textilauflage (15, 16, 18) wird zunächst wenigstens eine Beschichtung (19) aufgebracht, die wenigstens einen Reaktivverdünner gemäß DIN 55945:2007-03 enthält;
wobei der Reaktivverdünner ist aus der Gruppe der Methacrylate und/ oder der Acrylate und/oder Vinylether und/oder Glycidylether ausgewählt;
- die Kraftübertragungszone (14) und / oder die Decklage (11) des noch unvulkanisierten Riemenrohlings wird mit der beschichteten Textilauflage (15, 16, 18) konfektioniert;
- Vulkanisation des Riemenrohlings unter Ausbildung eines Haftverbundes von Grundkörper (17), Textilauflage (15, 16, 18) und Beschichtung (19).

9. Verfahren nach Anspruch 7 oder 8, **dadurch gekennzeichnet, dass** die Eindringtiefe (v) der Beschichtung (19) in die Textilauflage (15, 16, 18) 10 bis 90 % der Dicke (w) der Textilauflage (15, 16, 18) entspricht.

10. Verfahren nach einem der Ansprüche 7 bis 9, **dadurch gekennzeichnet, dass** die Beschichtung (19) mittels einer Gewebestreichvorrichtung auf die Textilauflage (15, 16, 18) aufgestrichen wird.

11. Verfahren nach einem der Ansprüche 7 bis 10 zur Herstellung eines Zahnriemens (10).

## Claims

1. Power transmission belt (10, 20) having an elastic main body (17), comprising a top ply (11) as belt spine and a substructure (13) having a power transmission zone (14), wherein at least one textile cover ply (15, 16, 18) is provided to the power transmission zone (14) and/or to the top ply (11),
**characterized in that** the textile cover ply (15, 16, 18) on the power transmission zone (14) and/or the top ply (11) has at least one coating (19) which contains at least one reactive diluent conforming to DIN 55945:2007-03, wherein reactive diluent conforming to DIN 55945:2007-03 is selected from the group of methacrylates and/or acrylates and/or vinyl ethers and/or glycidyl ethers.

2. Power transmission belt according to Claim 1, **characterized in that** the textile cover ply (15, 16, 18) consists of a woven fabric or of a knitted fabric.

3. Power transmission belt according to Claim 1, **characterized in that** the reactive diluent conforming to DIN 55945:2007-03 is selected from the group of methacrylates and/or acrylates.

4. Power transmission belt according to any of Claims 1 to 3, **characterized in that** the penetration depth (v) of coating (19) into the textile cover ply (15, 16, 18) corresponds to from 10 to 90% of the thickness (w) of the textile cover ply (15, 16, 18).

5. Power transmission belt according to any of Claims 1 to 4, **characterized in that** it is configured as a toothed belt (10).

6. Power transmission belt according to any of Claims 1 to 5, **characterized in that** the power transmission belt (10, 20) is sheathed.

7. Process for producing a power transmission belt (10, 20) having an elastic main body (17), comprising a top ply (11) as belt spine and a substructure (13) having a power transmission zone (14), wherein at least one textile cover ply (15, 16, 18) is provided to the power transmission zone (14) and/or to the top ply (11), **characterized by** at least the steps of:
- covering the power transmission zone (14) and/or the top ply (11) of the still unvulcanized belt blank with at least one textile cover ply (15, 16, 18);
- subsequently applying atop the textile cover ply (15, 16, 18) at least one coating (19) which contains at least one reactive diluent conforming to DIN 55945:2007-03;
wherein the reactive diluent is selected from the group of methacrylates and/or acrylates and/or vinyl ethers and/or glycidyl ethers;
- vulcanizing the belt blank to form a bonded assembly of elastomeric main body (17), textile cover ply (15, 16, 18) and coating (19).

8. Process for producing a power transmission belt (10, 20) having an elastic main body (17), comprising a top ply (11) as belt spine and a substructure (13) having a power transmission zone (14), wherein at least one textile cover ply (15, 16, 18) is provided to the power transmission zone (14) and/or to the top ply (11), **characterized by** at least the steps of:
- initially applying atop the separate textile cover ply (15, 16, 18) at least one coating (19) which contains at least one reactive diluent conforming to DIN 55945:2007-03;
wherein the reactive diluent is selected from the group of methacrylates and/or acrylates and/or vinyl ethers and/or glycidyl ethers;
- covering the power transmission zone (14) and/or the top ply (11) of the still unvulcanized belt blank with the coated textile cover ply (15, 16, 18);
- vulcanizing the belt blank to form a bonded assembly of main body (17), textile cover ply (15, 16, 18) and coating (19).

9. Process according to Claim 7 or 8, **characterized in that** the penetration depth (v) of coating (19) into the textile cover ply (15, 16, 18) corresponds to from 10 to 90% of the thickness (w) of the textile cover ply (15, 16, 18).

10. Process according to any of Claims 7 to 9, **characterized in that** the coating (19) is applied atop the textile cover ply (15, 16, 18) using a fabric spread-coating apparatus.

11. Process according to any of Claims 7 to 10 for producing a toothed belt (10).

## Revendications

1. Courroie (10, 20) de transfert de force présentant un corps élastique de base (17) comprenant une couche de recouvrement (11) qui sert de dos à la courroie et une sous-structure (13) dotée d'une zone (14) de transfert de force,
la zone (14) de transfert de force et/ou la couche de recouvrement (11) étant dotées d'au moins une couche textile (15, 16, 18),
**caractérisée en ce que**
la couche textile (15, 16, 18) de la zone (14) de transfert de force et/ou de la couche de recouvrement (11) est dotée d'au moins un revêtement (19) qui contient au moins un diluant réactif selon la norme DIN 55945:2007-03, le diluant réactif selon la norme DIN 55945:2007-03 étant sélectionné dans l'ensemble constitué des méthacrylates, des acrylates, des éthers de vinyle et/ou des éthers de glycidyle.

2. Courroie de transfert de force selon la revendication 1, **caractérisée en ce que** la couche textile (15, 16, 18) est constituée d'un tissu ou d'un tricot.

3. Courroie de transfert de force selon la revendication 1, **caractérisée en ce que** le diluant réactif selon la norme DIN 55945:2007-03 est sélectionné dans l'ensemble constitué des méthacrylates et/ou des acrylates.

4. Courroie de transfert de force selon l'une des revendications 1 à 3, **caractérisée en ce que** la profondeur de pénétration (v) du revêtement (19) dans la couche textile (15, 16, 18) correspond à 10-90 % de l'épaisseur (w) de la couche textile (15, 16, 18).

5. Courroie de transfert de force selon l'une des revendications 1 à 4, **caractérisée en ce qu'**elle est configurée comme courroie crantée (10).

6. Courroie de transfert de force selon l'une des revendications 1 à 5, **caractérisée en ce que** la courroie (10, 20) de transfert de force est enveloppée.

7. Procédé de fabrication d'une courroie (10, 20) de transfert de force dotée d'un corps élastique de base (17) comprenant une couche de recouvrement (11) qui sert de dos à la courroie et une sous-structure (13) dotée d'une zone (14) de transfert de force,
la zone (14) de transfert de force et/ou la couche de recouvrement (11) étant dotées d'au moins une couche textile (15, 16, 18),
**caractérisé par** au moins les étapes de traitement suivantes :
- la zone (14) de transfert de force et/ou la couche de recouvrement (11) de l'ébauche de courroie encore non volcanisée est confectionnée avec au moins une couche textile (15, 16, 18),
- au moins un revêtement (19) qui contient au moins un diluant réactif selon la norme DIN 55945:2007-03 est ensuite appliqué sur la couche textile (15, 16, 18),
- le diluant réactif étant sélectionné dans l'ensemble constitué des méthacrylates, des acrylates, des éthers de vinyle et/ou des éthers de glycidyle,
- vulcanisation de l'ébauche de courroie avec formation d'un composite constitué du corps de base élastomère (17), de la couche textile (15, 16, 18) et du revêtement (19).

8. Procédé de fabrication d'une courroie (10, 20) de transfert de force dotée d'un corps élastique de base (17) comprenant une couche de recouvrement (11) qui sert de dos à la courroie et une sous-structure (13) dotée d'une zone (14) de transfert de force,
la zone (14) de transfert de force et/ou la couche de recouvrement (11) étant dotées d'au moins une couche textile (15, 16, 18),
**caractérisé par** au moins les étapes de traitement suivantes :
- au moins un revêtement (19) qui contient au moins un diluant réactif selon la norme DIN 55945:2007-03 est appliqué sur la couche textile (15, 16, 18) séparée,
- le diluant réactif étant sélectionné dans l'ensemble constitué des méthacrylates, des acrylates, des éthers de vinyle et/ou des éthers de glycidyle,
- la zone (14) de transfert de force et/ou la couche de recouvrement (11) de l'ébauche de courroie encore non volcanisée est confectionnée avec au moins une couche textile (15, 16, 18),
- vulcanisation de l'ébauche de courroie avec formation d'un composite constitué du corps de base élastomère (17), de la couche textile (15, 16, 18) et du revêtement (19).

9. Procédé selon les revendications 7 ou 8, **caractérisé en ce que** la profondeur de pénétration (v) du revêtement (19) dans la couche textile (15, 16, 18) correspond à 10-90 % de l'épaisseur (w) de la couche textile (15, 16, 18).

10. Procédé selon l'une des revendications 7 à 9, **caractérisé en ce que** le revêtement (19) est étalé sur la couche textile (15, 16, 18) au moyen d'un dispositif d'enduction de tissu.

11. Procédé selon l'une des revendications 7 à 10, pour la fabrication d'une courroie crantée (10).
